# EUROPÄISCHE PATENTANMELDUNG

(11) **EP 1 369 160 A1**
(43) Veröffentlichungstag der Anmeldung: **10.12.2003**
(21) Anmeldenummer: 03101377.4
(22) Anmeldetag: 16.05.2003
(51) Int. Cl.: B01D 39/20, B01D 46/24

(54) **Filterelement, insbesondere zur Flüssigkeitsabscheidung aus einem Gasstrom**

(30) Priorität: 31.05.2002 DE 10224224
(71) Anmelder: MANN+HUMMEL GMBH, 71638 Ludwigsburg (DE)
(72) Erfinder: Heikamp, Wolfgang, 67165, Waldsee (DE)

(57) **Zusammenfassung**

Filterelement, insbesondere zur Flüssigkeitsabscheidung aus einem Gasstrom, mit einem aus Glasfaser bestehendem Filtervlies, das auf einem Trägerkörper angeordnet ist. Das Filtervlies weist einen Kohlenstofffaseranteil von 5 - 30 % und insbesondere 10 % auf.

## Beschreibung

### Stand der Technik

Die Erfindung bezieht sich auf ein Filterelement, insbesondere zur Flüssigkeitsabscheidung aus einem Gasstrom, nach dem Oberbegriff des Anspruches 1.

In der Druckschrift EP 0 674 582 B1 wird ein derartiges Filterelement beschreiben, welches aus einem Filtervlies mit unter Druck aneinander gesinterten Metallfasern sowie einem Metalldrahtgeflecht als Trägerkörper des Filtervlieses besteht. Durch den Sinterprozess werden die Metallfasern, welche eine Dicke von mindestens 8 µm aufweisen, zusammengebacken, wodurch sich eine vergleichsweise geringe Porosität von maximal 40 % ergibt. Diese Porosität ist ausreichend für die Reinigung von mit Partikeln verschmutzter Rohluft oder sonstigen gasförmigen Medien, da das Gas in der Lage ist, die Zwischenräume im Filtervlies unter Vermeidung eines unzulässig hohen Staudruckes zu durchströmen. Eine Reinigung flüssiger Medien ist jedoch nicht oder nur in einem eingeschränkten Maße möglich, da aufgrund der verhältnismäßig hohen Dichte des Filtervlieses ein Durchströmen nur mit Hilfe eines relativ hohen Staudruckes möglich ist, der jedoch in der Regel nicht erzeugt werden kann oder aber zu Schäden im Filtervlies führen kann.

Auch in der Druckschrift EP 0 639 398 B1 wird ein aus Metallfasern bestehendes Filtervlies beschrieben, wobei die Metallfasern einen Durchmesser von 5 bis 40 µm haben sollen. Das Filterelement wird bevorzugt zur Reinigung von Dieselabgasen eingesetzt, wobei das Metallfiltervlies die Rußpartikel aus dem Abgas abscheidet. Auch dieses Filtervlies ist aufgrund seiner verhältnismäßig hohen Dichte nur eingeschränkt für die Reinigung von verunreinigten Flüssigkeiten zu verwenden.

Es ist auch bekannt, anstelle von Metallfiltervlies Glasfasern zu verwenden. Diese dienen im wesentlichen dazu, Gase, insbesondere Luft, zu entölen, d. h. Flüssigkeit aus dem Gas abzuscheiden. Die DE 29 02 347 A1 beschreibt ein Filterelement und das Verfahren zur Herstellung desselben, bei dem eine Fasermenge in einer Flüssigkeit zur Bildung einer Verschlämmung verteilt wird. Die derart hergestellte Dispersion wird auf eine Filteroberfläche aufgebracht, so dass sich die Fasern als Fasermatte darauf sammeln und durch die Filteroberfläche zurückgehalten werden. Als Fasern eignen sich beispielsweise Borsilikat-Mikrofasern oder andere Fasern, die nach dem beschriebenen Dispersionsverfahren hergestellt werden können. Die derart hergestellten Filtersysteme eignen sich für verschiedene Anwendungen.

Beispielsweise werden solche Systeme in der Drucklufterzeugung eingesetzt und entölen die von einem Kompressor bereitgestellte Druckluft. Es hat sich gezeigt, dass bei der Verwendung eines Glasfaservlieses der Restölgehalt in der Druckluft zunächst sehr gering ist, nach einer längeren Betriebszeit jedoch stetig ansteigt. Auch eine Verwendung von oleophoben Glasfasern führt nicht zu dem gewünschten Erfolg, d. h. zu einem konstant niedrigen Restölgehalt.

Der Erfindung liegt die Aufgabe zugrunde, die genannten Nachteile zu vermeiden und ein Filterelement, insbesondere zur Flüssigkeitsabscheidung aus einem Gasstrom, zu schaffen, welches eine hohe Ölabscheidung über einen längeren Zeitraum gewährleistet. Diese Aufgabe wird durch die Merkmale des Anspruchs 1 gelöst.

Die Unteransprüche geben zweckmäßige Weiterbildungen an.

Ein wesentlicher Vorteil der Erfindung liegt darin, dass die in dem Glasfaservlies enthaltenen Kohlenstofffasern den Restölgehalt über eine längere Standzeit optimieren, d. h. die Wirkung der oleophoben Glasfasern unterstützen. Der Vorteil der oloephoben Glasfasern liegt darin, dass diese einen geringen Druckverlust aufweisen, da das Medium offener gestaltet werden kann, als bisher üblich. Durch den Kohlenstofffaseranteil und die verbesserte Wirkung, wird eine geringere wirksame Filterfläche für die Entölung der Luft realisiert.

Eine Ausgestaltung der Erfindung sieht vor, das Filterelement mehrschichtig aufzubauen. Dabei besteht die Möglichkeit, reine Glasfaserschichten mit Glasfaser-Kohlenstofffaser-Schichten zu kombinieren oder Glasfaserschichten mit reinen Kohlenstofffaserschichten zu kombinieren. Vorteilhafterweise ist das Filterelement auf einem Trägerkörper angeordnet, der beispielsweise eine Gitterstruktur aufweist. Dieser Trägerkörper kann die Form eines Hohlzylinders besitzen, so dass das Filtervlies auf den Außenmantel des Trägerkörpers aufgewickelt ist. Es besteht auch die Möglichkeit, das Filtervlies auf dem Innenmantel des Trägerkörpers anzuordnen.

Ein Vorteil der Kohlenstofffasern liegt ferner darin, dass die elektrostatische Aufladung vermieden wird. Ladungsströme können über die Kohlenstofffasern nach außen abgeführt werden.

Eine weitere Ausgestaltung der Erfindung sieht vor, das gesamte Filterelement in einer austauschbaren Box anzuordnen, wie dies beispielsweise bei Ölfilterwechselelementen der Fall ist. Die Verwendung von hocheffektiven Abscheidemedien macht es erforderlich, die Elemente nach einer gewissen Betriebsstundenzahl zu wechseln. Hier ist es wichtig, dass keine Anschlüsse gelöst werden müssen und kein zusätzlicher Bauraum zum Ausbau in Anspruch genommen wird. Dies wird durch die Anordnung des Abscheideelements in einer Box gelöst. Die notwendigen Druckregeleinheiten können in einen Anschlußkopf integriert werden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: einen Schnitt durch ein hohlzylindrisches Filterelement mit einem innen liegenden Trägerkörper und einem Verbund aus drei übereinander geschichteten Lagen Filtervliese auf der äußeren Mantelfläche des Trägerkörpers,
- Figur 2: einen Abscheider zur Kurbelgehäuseentlüftung mit einem eingesetzten Filterelement und
- Figur 3: die Schnittdarstellung durch ein Abscheideelement in einer Kartusche und
- Figur 4: eine Schnittdarstellung einer Einrichtung zum Abscheiden von Öl aus Luft.

### Beschreibung der Ausführungsbeispiele

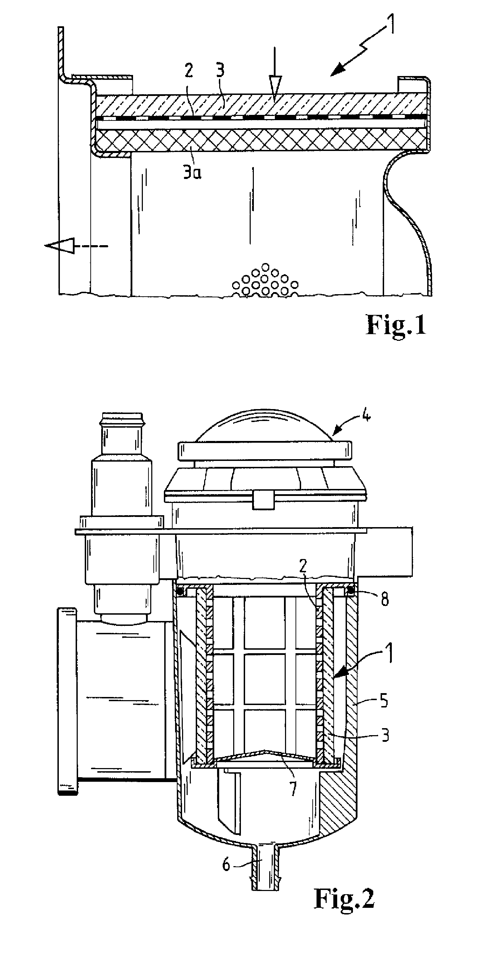

Das in Figur 1 dargestellte Filterelement 1 besteht aus einem die Form eines Hohlzylinders aufweisenden Trägerkörpers 2 und einer oder mehreren Lagen Filtervliese 3, die auf die zylindrische, äußere Mantelfläche des Trägerkörpers 2 aufgewickelt sind. Jede Filtervlieslage besteht aus Glasfasern, die einen ungesinterten Verbund bilden und dadurch eine hohe Porosität von mindestens 90 %, gegebenenfalls sogar über 99 % aufweisen. Innerhalb jeder Filtervlieslage sind zweckmäßig Kohlenstofffasern angeordnet. Das Nachabscheidervlies 3a besteht aus einem Polyestermaterial.

Bei einer mehrlagigen Ausführung mit zumindest zwei Filtervlieslagen kann der Abscheidegrad entsprechend den verwendeten Fasern in jeder Lage beeinflußt werden. Eine weitere Einstellmöglichkeit ergibt sich durch die Wickelkraft, mit der jedes Filtervlies um den Trägerkörper gewickelt wird. Aufgrund der Kompressibilität des Filtervlieses beeinflußt die Wickelkraft die Dichte des Vlieses und damit auch den Abscheidegrad.

Der Trägerkörper besteht auf Kunststoff oder Metall und ist aus zwei Endscheiben und einem Stützrohr für die Vlieslage 3 aufgebaut. Das Filterelement 1 wird vorteilhaft radial von außen nach innen von dem zu reinigenden Medium, insbesondere von einem Öl-Luft-Gemisch durchströmt, wobei die Ölpartikel abgeschieden werden und die Luft in den Zylinderinnenraum einströmt und aus diesem axial abgeführt wird.

Es kann gegebenenfalls auch zweckmäßig sein, das Filterelement in Gegenrichtung von innen radial nach außen durchströmen zu lassen, so dass sich die Rohseite im Zylinderinnenraum und die Reinseite radial auf der Außenseite des Filterelementes befinden. Abströmseitig ist eine Drainageschicht zum Ableiten des abgeschiedenen Öls vorgesehen.

Figur 2 zeigt einen Abscheider 4, welcher insbesondere zur Kurbelgehäuseentlüftung einer Brennkraftmaschine oder zur Luftentölung bei Kompressoren eingesetzt wird. In einem Gehäuse 5 des Abscheiders 4 ist ein Filterelement 1 mit dem Trägerkörper 2 und mindestens einem Filtervlies 3 eingesetzt. Das Filterelement 1 wird radial von außen nach innen durchströmt, wobei die radial nach außen liegende Rohseite mit einer Austragsöffnung 6 im Boden des Gehäuses 5 des Abscheiders 4 kommuniziert, über die das abgeschiedene Öl aus dem Abscheider abgeleitet werden kann. Die gereinigte Luft wird über die innen liegende Reinseite axial nach oben abgeleitet, wobei am Boden des Filterelementes 1 eine mit dem Trägerkörper 2 verbundene Bodenplatte 7 die Reinseite von der darunter liegenden Rohseite separiert. Über einen Dichtring 8, welcher in einer Aufnahmenut in einem Deckelabschnitt des Trägerkörpers 2 aufgenommen ist, wird der Filterelementinnenraum nach oben hin gegenüber der Rohseite strömungsdicht abgedichtet.

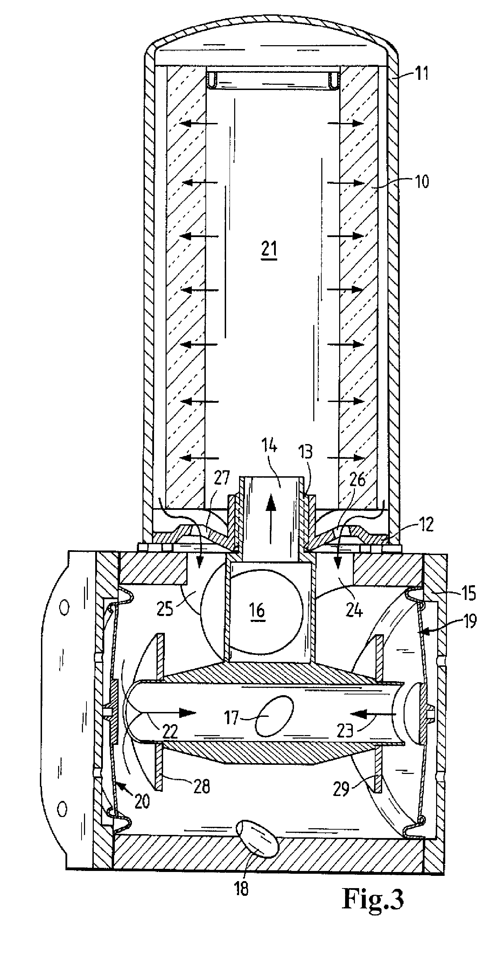

Figur 3 zeigt ein Abscheideelement in einer Kartusche, die in Form eines Wechselelements aufgebaut ist. Das Ölabscheideelement 10 ist in einem topfförmigen Gehäuse 11 angeordnet. Dieses topfförmige Gehäuse 11 ist an seiner Unterseite mit einem Deckel 12 verschlossen. Das Gehäuse 11 ist über einen Bördelrand mit dem Deckel 12 verbunden. Dieser Deckel 12 weist eine Gewindebuchse 13 auf. Mit dieser Gewindebuchse 13 wird das gesamte Abscheideelement an einem Gewindestutzen 14 angeschraubt. Der Gewindestutzen 14 ist Teil eines Modulträgers 15. Dieser Modulträger 15 weist drei Anschlüsse auf: eine Einströmöffnung 16, eine Abströmöffnung 17 sowie eine Ablauföffnung 18. Außerdem sind in dem Modulträger 15 zwei Unterdruckventile 19, 20 angeordnet.

Durch die Eintrittsöffnung 16 strömt ölhaltige Luft in die Eintrittskammer 21. Von der Eintrittskammer 21 strömt die Luft gemäß den Pfeilen durch das Ölabscheideelement 10, welches das Filtervlies gemäß Figur 2 enthält. Die entölte Luft tritt durch die Öffnungen 26, 27 aus dem Gehäuse 11 des Wechselelements aus. Das Gehäuse 11 ist dichtend mit dem Modulträger 15 verbunden, daher strömt die entölte Luft, welche durch die Öffnungen 26, 27 aus dem Gehäuse ausgetreten ist, durch die Öffnungen 24, 25 in den Modulträger 15 ein. Gemäß den Pfeilen 22, 23 wird die entölte Luft zu der Abströmöffnung 17 geleitet.

Das in dem Ölabscheideelement 10 sich ansammelnde Öl gelangt, wie auch die entölte Luft über die Öffnungen 26, 27 bzw. 24, 25 in den Modulträger 15. Hier sammelt sich das Öl am Boden und strömt über die Ablauföffnung 18 ab. Damit das Öl, welches durch die Öffnungen 24, 25 in den Modulträger 15 gelangt nicht durch den entölten Luftstrom zu der Abströmöffnung 17 mitgerissen wird, sind Scheiben 28, 29 vorgesehen. Die Scheiben 28, 29 stauen das Öl auf und lassen es in Richtung Ablauföffnung 18 ablaufen. Zum Austausch des Ölabscheideelements 10 ist es lediglich erforderlich, dieses von dem Gewindestutzen 14 zu lösen. Dies hat den Vorteil, dass Anschlüsse oder sonstige Ventile nicht gelöst oder ausgetauscht werden müssen. Außerdem wird kein zusätzlicher Bauraum beim Ausbau in Anspruch genommen.

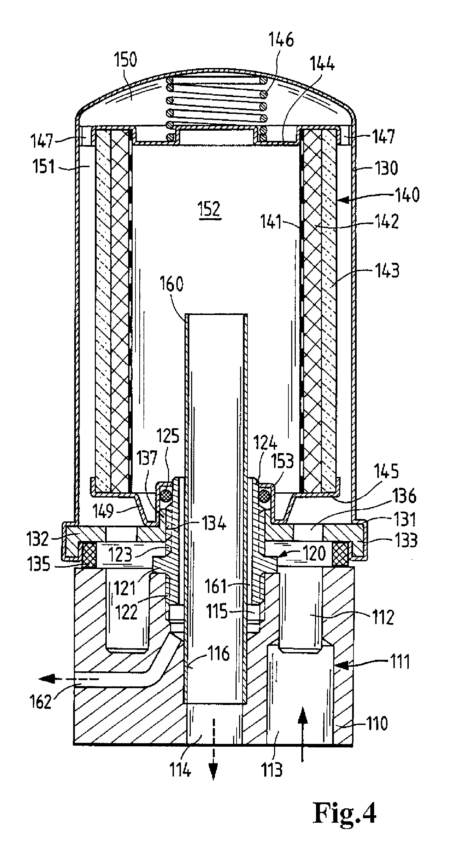

Figur 4 zeigt eine Einrichtung zum Abscheiden von Öl aus Luft im Schnitt. Ein Abscheiderkopf 110 hat für die Rohluft einen außermittig angeordneten Zuströmkanal 111, der aus einem Ringkanal 112 und einem in diesen einmündenden Anschlußkanal 113 besteht. Für die Reinluft weist der Abscheiderkopf 110 einen mittig angeordneten Abströmkanal 114 auf, der in seinem oberen Bereich auf einen größeren Durchmesser erweitert und dort als Gewindebohrung 115 ausgestaltet ist.

Ein Gewinderohrstutzen 120 weist in einem mittleren Bereich einen Kragen 121 auf, an den sich auf beiden Seiten Gewindeansätze 122 und 123 anschließen. Mit dem unteren Gewindesatz 122 ist der Gewinderohrstutzen 120 in die Gewindebohrung 115 des Abscheiderkopfs 110 bis zur Anlage des Kragens 121 eingeschraubt.

Ein haubenförmiges Gehäuse 130 ist mit vertikaler Achse angeordnet und hat nahe seinem unteren Ende einen Absatz 131. Ein Gehäusedeckel 132 ist mit einem nach unten abgebogenen Rand 133 versehen, den das Gehäuse 130 bei Anlage des Gehäusedeckels 132 am Absatz 131 dichtend umgreift. Der somit das Gehäuse an der unteren Stirnseite verschließende Gehäusedeckel 132 weist in einem Ringkragen 137 eine zentrale Gewindebohrung 134 zum Aufschrauben auf den Gewindesatz 123 des Gewindestutzens 120 und konzentrisch dazu einen radial außerhalb angeordneten, mit ihm verklebten Dichtring 135 zum abdichtenden Anliegen an der benachbarten Stirnseite des Abscheiderkopfes 110 auf. Im Bereich zwischen der Gewindebohrung 134 und dem Dichtring 135 hat der Gehäusedeckel 132 mehrere auf einem Kreisring angeordnete Zuströmöffnungen 136.

Im Gehäuse 130 ist ein Abscheideelement 140 angeordnet, das aus einem zylindrischen gelochten Stützmantel 141, einem Abscheiderring 142 aus Polyestervlies und einem Abscheiderring 143 sowie stirnseitigen Endscheiben 144 und 145 besteht. Der Abscheiderring besteht aus einem Glasfaserwickel mit Kohlenstoffaseranteil. Selbstverständlich kann es sich auch um eine Glasfasermatte handeln, die zick-zack-förmig gestaltet ist und ebenfalls Kohlenstofffasern enthält. Die obere Endscheibe 144 verschließt das Abscheideelement 140 an der oberen Stirnseite und bildet ein Widerlager für eine Schraubendruckfeder 146, die sich am Boden des Gehäuses 130 abstützt. Am Außenumfang hat die obere Endscheibe 144 mehrere radial nach außen vorstehende Nasen 147, über die die Endscheibe 144 und damit das Abscheideelement 140 am oberen Ende im Gehäuse 130 zentriert ist.

Die untere Endscheibe 145 verschließt das untere Ende des Abscheideelements 140 und zentriert sich und damit das Abscheideelement 140 über eine Ringsicke 149 an dem Ringkragen 137 des Gehäusedeckels 132. Das Abscheideelement 140 wird durch die Schraubendruckfeder 146 axial gegen den Gehäusedeckel 132 angepreßt und unterteilt den Innenraum 150 des Gehäuses 130 in einen Rohluftraum 151, der mit den Zuströmöffnungen 136 in Verbindung steht, und einen Reinluftraum 152, der an den Gewinderohrstutzen 120 angeschlossen ist.

Zum Ableiten der Reinluft ist der Abscheiderkopf 110 mit einem in einen Paßsitz 116 eingepreßten Standrohr 160 versehen, das in den Abströmkanal 114 einmündet und den Gewinderohrstutzen 120 nach oben deutlich überragt, indem es bis etwa in die Mitte des Abscheideelements 140 hineinreicht. Das Standrohr 160 bildet mit dem Gewinderohrstutzen 120 einen Ringspalt 161, der an einen Ablaßkanal 162 angeschlossen ist.

Der Gewinderohrstutzen 120 hat im Bereich seines oberen Endes einen zylindrischen Ansatz 124. Ein Dichtring 125 ist radial zwischen einer Zylinderwand 153 der unteren Endscheibe 145 und dem Ansatz 124 des Gewinderohrstutzens 120 eingespannt und dichtet somit den Reinluftraum 152 hermetisch vom Rohluftraum 151 ab.

Im Betrieb strömt die Rohluft in Pfeilrichtung durch den Anschlußkanal 113, den Ringkanal 112 und die Zuströmöffnungen 136 in den Rohluftraum 151. Sodann durchquert die Luft nacheinander die Abscheiderringe 143 und 142, in denen die feinen Öltröpfchen zu größeren, sich nach unten absetzenden Öltropfen zusammengeballt werden. Die Reinluft verläßt das Abscheideelement 140 durch das Standrohr 160 und den Abströmkanal 114. Das sich auf der unteren Endscheibe 145 und am Außenumfang des Standrohres 160 absetzende Öl fließt durch den Ringspalt 161, die Gewindebohrung 115 und den Ablaßkanal 162 zum nicht dargestellten Auffangbehälter.

Ein Austausch des Gehäuses 130 mit dem Abscheideelement 140, der beispielsweise wegen Verschmutzung gelegentlich notwendig werden mag, erfolgt durch einfaches Abschrauben von Gewinderohrstutzen 120 und Aufschrauben eines neuen Gehäuses 130 bis zur abdichtenden Anlage des Dichtrings 135 am Abscheiderkopf 110. Alle Anschlüsse für das Zuleiten der zu reinigenden Luft zum Abscheideelement 140, das Ableiten der Reinluft sowie das Abführen des abzuscheidenden Öls sind damit hergestellt.

## Patentansprüche

1. Filterelement, insbesondere zur Flüssigkeitsabscheidung aus einem Gasstrom, mit einem aus Glasfaser bestehendem Filtervlies (3), **dadurch gekennzeichnet, dass** das Filtervlies (3) einen Kohlenstofffaseranteil von 5-30 % und insbesondere 10 % aufweist.

2. Filterelement nach Anspruch 1, **dadurch gekennzeichnet, dass** das Filtervlies auf einem Trägerkörper (2) angeordnet ist.

3. Filterelement nach Anspruch 1, **dadurch gekennzeichnet, dass** die Glasfasern oleophobe Glasfasern und die Kohlestoffasern oleophile Fasern sind.

4. Filterelement nach Anspruch 1 oder 2, **dadurch gekennzeichnet, dass** der Kohlenstofffaseranteil in einem Mehrschichtaufbau zwischen Glasfaserlagen angeordnet ist.

5. Filterelement nach einem der vorherigen Ansprüche, **dadurch gekennzeichnet, dass** ein Trägerkörper (2) für das Filtervlies vorgesehen ist, wobei der Trägerkörper (2) insbesondere eine Gitterstruktur aufweist.

6. Filterelement nach einem der vorherigen Ansprüche, **dadurch gekennzeichnet, dass** der Trägerkörper (2) die Form eines Hohlzylinders aufweist und das Filtervlies (3) auf den Außenmantel des Trägerkörpers (2)aufgewickelt ist.

7. Filterelement nach einem der vorherigen Ansprüche, **dadurch gekennzeichnet, dass** die Kohlenstofffasern eine elektrische Leitfähigkeit besitzen und eventuell entstehende elektrostatische Aufladung an den Trägerkörper (2) oder Ableitelemente abführen.

8. Filterelement nach Anspruch 5, **dadurch gekennzeichnet, dass** dieses in einem Gehäuse (5) angeordnet ist, wobei das Gehäuse (5) einen Einlaß für den Gasstrom und einen Auslaß für den gereinigten Gasstrom, eine Anschlußplatte und eine topfförmige Gehäusestruktur aufweist und das Filterelement (1) konzentrisch in dem Gehäuse auf einem Trägerkörper (2) befestigt ist.

9. Filterelement nach einem der vorherigen Ansprüche, **dadurch gekennzeichnet, dass** dieses von innen nach außen durchströmt ist.

10. Filterelement nach einem der vorherigen Ansprüche, **dadurch gekennzeichnet, dass** abströmseitig an dem Vlies eine Drainageschicht angeordnet ist.
